(19) Europäisches Patentamt
European Patent Office
Office européen des brevets

(11) **EP 4 403 842 A1**

(12) **EUROPEAN PATENT APPLICATION**
published in accordance with Art. 153(4) EPC

(43) Date of publication:
**24.07.2024 Bulletin 2024/30**

(21) Application number: **22875982.5**

(22) Date of filing: **21.09.2022**

(51) International Patent Classification (IPC):
*F24F 11/79* (2018.01)   *G01B 11/00* (2006.01)
*G05D 3/00* (2006.01)   *H04N 23/60* (2023.01)
*F24F 120/12* (2018.01)

(52) Cooperative Patent Classification (CPC):
**F24F 11/79; G01B 11/00; G05D 3/00; H04N 23/60;**
F24F 2120/12

(86) International application number:
**PCT/JP2022/035168**

(87) International publication number:
**WO 2023/054115 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021  JP 2021160886**

(71) Applicant: **DAIKIN INDUSTRIES, LTD.
Osaka-shi, Osaka 530-0001 (JP)**

(72) Inventors:
• **KIKUCHI, Takayuki
Osaka-shi, Osaka 530-0001 (JP)**
• **IMAI, Yosuke
Osaka-shi, Osaka 530-0001 (JP)**
• **EMURA, Chie
Osaka-shi, Osaka 530-0001 (JP)**

(74) Representative: **Hoffmann Eitle
Patent- und Rechtsanwälte PartmbB
Arabellastraße 30
81925 München (DE)**

(54) **CONTROL SYSTEM**

(57)   A control system (10) includes an imaging unit (22) acquiring an image of a plane including a target (T); an actuator (35) providing physical action to the target (T), and a control unit (70) controlling the actuator (35). The control unit (70) includes a setting unit (72) and an adjustment unit (73). The setting unit (72) uses a relationship between four or more different position coordinates on the plane and directions of the actuator (35) corresponding to the four or more different position coordinates to set a transformation characteristic of transformation of any position coordinates on the plane into the direction of the actuator (35). The adjustment unit (73) uses the position coordinates of the target (T) on the plane and the transformation characteristic to adjust the direction of the actuator (35) so that the physical action is provided to the target (T).

FIG.4

**Description**

TECHNICAL FIELD

The present disclosure relates to a control system.

BACKGROUND ART

Patent Document 1 discloses that, for control of a direction of an air cannon, coordinates of a target and coordinates of an air cannon are acquired and used to calculate the direction of the air cannon.

CITATION LIST

PATENT DOCUMENT

Patent Document 1: Japanese Unexamined Patent Publication No. 2019-144464

SUMMARY OF THE INVENTION

TECHNICAL PROBLEM

However, the system of Patent Document 1 requires measurement of position information on each of an imaging unit for acquiring target coordinates, an air cannon, and a target, if the imaging unit and the air cannon are intended to be installed at certain positions. Thus, it bothers a user to measure the position information about the imaging unit, the air cannon, and the target every time the system is installed, the layout of the system is changed, and the like. Further, an imaging unit, such as a stereo camera, capable of measuring a three-dimensional position is more expensive than a normal camera. Thus, the product price of the system becomes high, and there are heavier loads including the above bother on the user.

It is an object of the present disclosure to provide a control system for controlling an actuator providing physical action to a target based on the target position information acquired by an imaging unit, where there are fewer loads on a user without limitation to the positional relationship between the imaging unit and the actuator.

SOLUTION TO THE PROBLEM

A first aspect of the present disclosure is directed to a control system including an imaging unit (22) configured to acquire an image of a plane including a target (T); an actuator (35, 92) configured to provide physical action to the target (T); and a control unit (70) configured to control the actuator (35, 92). The control unit (70) includes a setting unit (72) and an adjustment unit (73). The setting unit (72) is configured to use a relationship between four or more different position coordinates on the plane and directions of the actuator (35, 92) corresponding to the four or more different position coordinates to set a transformation characteristic of transformation of any position coordinates on the plane into a direction of the actuator (35, 92). The adjustment unit (73) is configured to use position coordinates of the target (T) on the plane and the transformation characteristic to adjust the direction of the actuator (35, 92) so that the physical action is provided to the target (T).

In the first aspect, even when the user installs the imaging unit (22) and the actuator (35, 92) separately at any positions, the direction of the actuator (35, 92) can be controlled with a smaller number of procedures than that of conventional procedures without using an expensive three-dimensional imaging unit such as a stereo camera. Thus, there are fewer loads on the user.

A second aspect of the present disclosure is an embodiment of the first aspect. In the second aspect, the control system further includes a position specifying unit (37) configured to point to one point on the plane. The setting unit (72) specifies a direction of the actuator (35, 92) corresponding to the point pointed to by the position specifying unit (37).

In the second aspect, the position specifying unit (37) is used to easily specify the direction of the actuator (35, 92). The position specifying unit (37) may be, e.g., a laser pointer. The position specifying unit (37) and the actuator (35, 92) may be integrated with, or separated from each other.

A third aspect of the present disclosure is an embodiment of the second aspect. In the third aspect, the position specifying unit (37) and the actuator (35, 92) operate in conjunction with each other.

In the third aspect, the position specifying unit (37) is used to accurately specify the direction of the actuator (35, 92).

A fourth aspect of the present disclosure is an embodiment of any one of the first to third aspects. In the fourth aspect, the setting unit (72) specifies the direction of the actuator (35, 92) corresponding to each of the four or more different position coordinates based on a change in the physical action when the actuator (35, 92) is driven.

In the fourth aspect, the directions of the actuator (35, 92) corresponding to the position coordinates can be easily specified.

A fifth aspect of the present disclosure is an embodiment of any one of the first to fourth aspects. In the fifth aspect, the adjustment unit (73) acquires position coordinates of the target (T) on the plane from the amount of a feature in the image.

In the fifth aspect, the position coordinates of the target (T) can be easily and accurately acquired based on the amount of each feature such as luminance, heat, motion, and the like in the image.

A sixth aspect of the present disclosure is an embodiment of any one of the first to fifth aspects. In the sixth aspect, the setting unit (72) is configured to enable the user to designate an area in the image to be used for setting the transformation characteristic.

In the sixth aspect, an image region unnecessary for setting the transformation characteristic can be excluded.

A seventh aspect of the present disclosure is an embodiment of any one of the first to sixth aspects. In the seventh aspect, the setting unit (72) is configured to enable the user to designate a direction of the actuator (35, 92).

In the seventh aspect, the direction of the actuator (35, 92) can be specified based on a change in the physical action when the user drives the actuator (35, 92).

An eighth aspect of the present disclosure is an embodiment of any one of the first to seventh aspects. In the eighth aspect, the actuator (35, 92) is an airflow control device (35, 92).

In the eighth aspect, in the control system for controlling the airflow control device (35, 92), there are fewer loads on the user without limitation to the positional relationship between the imaging unit (22) and the movable nozzle (35, 92).

A ninth aspect of the present disclosure is an embodiment of the eighth aspect. In the ninth aspect, the airflow control device (35, 92) is an outlet flap (92) of an indoor unit (91) of an air conditioning device (90).

In the ninth aspect, in the control system for controlling the outlet flap (92) of the indoor unit (91), there are fewer loads on the user without limitation to the positional relationship between the imaging unit (22) and the outlet flap (92).

A tenth aspect of the present disclosure is an embodiment of the eighth aspect. In the tenth aspect, the airflow control device (35, 92) is a movable nozzle (35) of a vortex ring generation device (20).

In the tenth aspect, in the control system for controlling the movable nozzle (35) of the vortex ring generation device (20), there are fewer loads on the user without limitation to the positional relationship between the imaging unit (22) and the movable nozzle (35).

BRIEF DESCRIPTION OF THE DRAWINGS

FIG. 1 is a schematic view showing a control system of an embodiment.
FIG. 2 is a longitudinal sectional view of a vortex ring generation device in the control system of the embodiment.
FIG. 3 is a transverse sectional view of the vortex ring generation device in the control system of the embodiment.
FIG. 4 is a conceptual diagram showing the configuration of a control unit in the control system of the embodiment.
FIG. 5 is a flowchart of the flow of calibration processing performed by the control system of the embodiment.
FIG. 6 is a flowchart of the flow of the calibration processing performed by the control system of the embodiment.
FIG. 7 is a view showing an example where a calibration area is displayed in the calibration processing performed by the control system of the embodiment.
FIG. 8 is a view showing an example where the direction of a vortex ring outlet is set in the calibration processing performed by the control system of the embodiment.
FIG. 9 is a diagram for describing a transformation characteristic calculation method in the calibration processing performed by the control system of the embodiment.
FIG. 10 is a diagram for describing the transformation characteristic calculation method in the calibration processing performed by the control system of the embodiment.
FIG. 11 is a diagram for describing the transformation characteristic calculation method in the calibration processing performed by the control system of the embodiment.
FIG. 12 is a diagram for describing the transformation characteristic calculation method in the calibration processing performed by the control system of the embodiment.
FIG. 13 is a diagram for describing the transformation characteristic calculation method in the calibration processing performed by the control system of the embodiment.

DESCRIPTION OF EMBODIMENTS

(Embodiments)

Embodiments of the present disclosure will be described below with reference to the accompanying drawings. The following embodiments are merely preferred examples in nature, and are not intended to limit the scope, applications, or use of the invention.

<Control System>

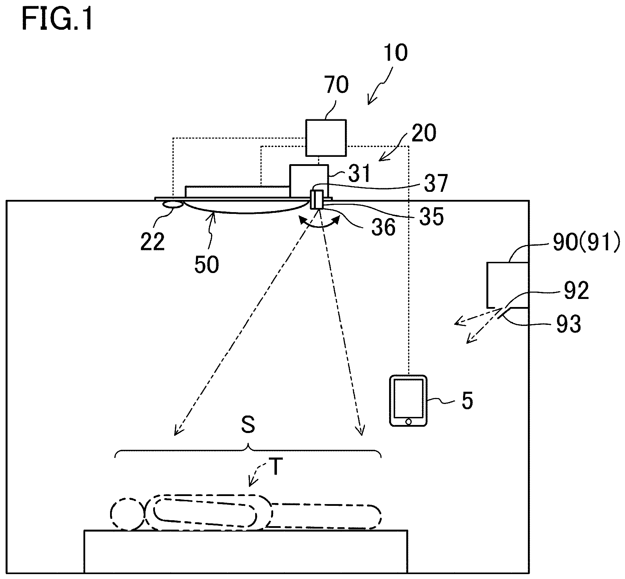

As shown in FIG. 1, a control system (10) of this embodiment is configured to supply a vortex ring containing, e.g., a scent component to a target such as a sleeping person (T) in a sleeping space (S). The sleeping space (S) may be, e.g., a space along the upper surface of a bed or a space along the upper surface of a mattress. The sleeping space (S) may include other spaces. For example, the sleeping space (S) may include a floor around a bed.

As shown in FIG. 1, the control system (10) mainly includes a vortex ring generation device (20), an imaging unit (22), a position specifying unit (37), an air conditioning device (90), a wireless communication terminal (5), and a control unit (70).

<Vortex Ring Generation Device>

The vortex ring generation device (20) is a device that generates an airflow in a vortex ring shape and blows the airflow locally and intermittently toward a position in the sleeping space (S). Here, the term "locally" means that the airflow is blown toward only a partial space in the sleeping space (S). The vortex ring generation device (20) is mounted on a lighting device (50) arranged above the sleeping space (S) as shown in FIG. 1, for example.

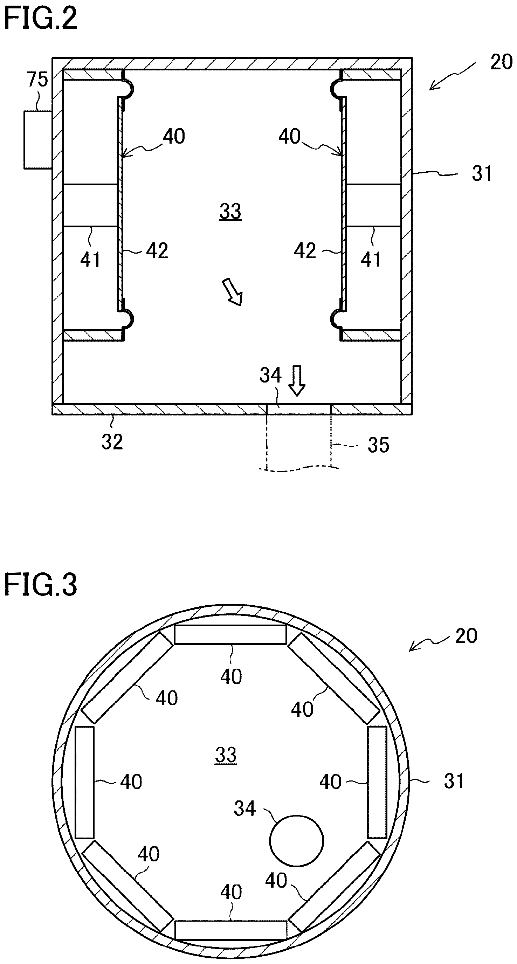

As shown in FIGS. 1 to 3, the vortex ring generation device (20) includes a cylindrical casing body (31) having a lower open end and a lower lid (32) that closes the lower open end of the casing body (31). The casing body (31) contains an air passage (33). The lower lid (32) has an opening (34) communicating with the air passage (33). The opening (34) is provided so as to face the sleeping space (S). The opening (34) is connected with a movable nozzle (35) as an actuator. The movable nozzle (35) includes a tip end portion (lower end portion) having a vortex ring outlet (36). Although not shown in the figure, the movable nozzle (35) is coupled to a motor via a rotary shaft. When the rotary shaft is rotationally driven by the motor, the orientation of the movable nozzle (35) is adjusted, and thus the orientation of the vortex ring outlet (36) is changed. Although not shown in the figure, the vortex ring generation device (20) may be provided with a component supply device. The component supply device supplies a predetermined emission component, such as a scent to be given to the vortex ring, to the air passage (33).

The casing body (31) contains a plurality of extrusion mechanisms (40). In this example, eight extrusion mechanisms (40) are provided. The number of extrusion mechanisms (40) is merely an example, and may be one to seven, and may be nine or more. Each extrusion mechanism (40) includes a linear actuator (41) as a drive unit and a vibration plate (42) driven by the linear actuator (41). The linear actuator (41) displaces the vibration plate (42) in the radial direction of the casing body (31). In this example, the plurality of extrusion mechanisms (40) are arranged along the inner peripheral wall of the casing body (31). The plurality of extrusion mechanisms (40) are arranged circumferentially at equal intervals.

The vortex ring generation device (20) includes a drive control unit (75) controlling the extrusion mechanisms (40). The drive control unit (75) includes a circuit board to be connected to the linear actuator (41). The drive control unit (75) is configured to adjust, e.g., the amplitude of vibration of the vibration plate (42) and the cycle of the vibration. For example, the drive control unit (75) may be arranged outside the casing body (31), or may be arranged inside the casing body (31). The drive control unit (75) may be configured as part of the control unit (70) described later.

When the amplitude (displacement amount) of the vibration of the vibration plate (42) is adjusted by the drive control unit (75), the flow velocity, i.e., the blowing speed, of the vortex ring-shaped airflow discharged from the vortex ring outlet (36) is adjusted. When the cycle of the vibration of the vibration plate (42) is adjusted by the drive control unit (75), the cycle of the vortex ring-shaped airflow discharged from the vortex ring outlet (36) is adjusted. In other words, when the cycle of the vibration of the vibration plate (42) is adjusted by the drive control unit (75), the number of discharges per minute (count per minute, or cpm), for example, of the vortex ring-shaped airflow from the vortex ring outlet (36) is adjusted. The number of blows (cpm) of the vortex ring-shaped airflow may be set to a range of, e.g., 40 or more and 90 or less. As described above, in this embodiment, the number of blows of the vortex ring-shaped airflow and the blowing speed of the vortex ring-shaped airflow are changed by the control of the extrusion mechanism (40).

In this example, the vortex ring with the scent component is supplied to the sleeping person (T), but the component added to the vortex ring may be any emission component other than the scent component, or only the vortex ring without the emission component may be supplied to the sleeping person (T). Further, the target to be supplied with the vortex ring may not be the sleeping person (T). For example, the vortex ring generation device (20) may be installed on a wall in a conference room or other venues to supply a vortex ring containing, e.g., a scent toward the center of the indoor space.

<Operation of Vortex Ring Generation Device>

When the vortex ring generation device (20) is operated, the vibration plate (42) of each of the extrusion mechanisms (40) is driven by the linear actuator (41). When the vibration plate (42) vibrates back and forth and the volume of the air passage (33) is decreased, the air containing the scent component is pushed toward the vortex ring outlet (36). The air passing through the vortex ring outlet (36) has a relatively high flow velocity, whereas the air around the vortex ring outlet (36) remains stationary. Thus, the shearing force acts upon the air at the plane of discontinuity between these two kinds of air, such that a vortex flow is generated near the outer peripheral edge of the vortex ring outlet (36). This vortex flow produces an airflow (vortex ring) moving downward from the vortex ring outlet (36). The vortex ring discharged from the vortex ring outlet (36) flows downward toward the sleeping person (T). The vortex ring contains a scent component, and thus the scent component reaches the sleeping person (T). This scent component enables the sleeping person (T) to experience, e.g., a relaxing effect.

<Imaging Unit>

The imaging unit (22) is, e.g., a thermo camera that acquires an image of temperature distribution in the sleeping space (S). In this example, the imaging unit (22) is installed near the lighting device (50) on the ceiling, but the installation position of the imaging unit (22) is not particularly limited. The imaging unit (22) of this example captures an image of the temperature distribution when the entire sleeping space (S) including the sleeping person (T) is viewed in plan view, and acquires a temperature distribution image (thermal image).
The imaging unit (22) is not limited to the thermo camera and may be another type of camera such as an infrared camera as long as the imaging unit (22) can acquire a two-dimensional image of the entire sleeping space (S) including the sleeping person (T).

<Position Specifying Unit>

The position specifying unit (37) points to one point in the sleeping space (S). The position specifying unit (37) such as a laser pointer, a projector, or the like may be configured to be capable of specifying the point pointed to using the imaging unit (22). The position specifying unit (37) may be integrated with or separated from the movable nozzle (35) as an actuator. The position specifying unit (37) and the movable nozzle (35) may be configured to operate in conjunction with each other. For example, a laser pointer as the position specifying unit (37) may be provided at the center of the vortex ring outlet (36) in the movable nozzle (35) so that the laser pointer can move together with the vortex ring outlet (36).
As will be described later, in this example, the position specifying unit (e.g., laser pointer) (37) that operates in conjunction with the direction (operation angle) of the movable nozzle (35) as an actuator is operated in four or more directions, and a point pointed to (e.g., laser pointer irradiation position) is specified using, e.g., an image acquired by the imaging unit (22). Further, a relationship between the specified position coordinates and the direction of the actuator are used to acquire a transformation characteristic of transformation of any position coordinates into the direction of the actuator.
The movable nozzle (35) itself as an actuator may be used as the position specifying unit. Since the vortex ring discharged from the movable nozzle (35) is transparent, the imaging unit (22) cannot recognize where the vortex ring hits. Thus, whether the movable nozzle (35) is directed toward the user (e.g., face) may be determined based on a change in physical action generated when the user drives the movable nozzle (35), where the direction of the movable nozzle (35) can be designated by the user. In this manner, the transformation characteristic can be obtained by using the relationship between the position coordinates of the user and the direction of the actuator where the movable nozzle (35) is directed toward the user.

<Air Conditioning Device>

The air conditioning device (90) conditions air in the indoor space including the sleeping space (S). The air conditioning device (90) has, e.g., an indoor unit (91) of wall-mounted type to be attached to a wall in the indoor space. Although not shown in the figure, the indoor unit (91) is coupled to an outdoor unit via a refrigerant pipe. The air conditioning device (90) cools or heats indoor air (room air) depending on refrigerant with which a refrigeration cycle is performed. In this manner, the temperature of air in the indoor space is adjusted. The air conditioning device (90) may be capable of adjusting the humidity of the indoor air (room air) in addition to the temperature thereof.

The indoor unit (91) is provided with an air outlet (92), and also provided with an outlet flap (93) to open and close the air outlet (92). Although not shown in the figure, the outlet flap (93) is coupled to a motor via a rotary shaft. When the rotary shaft is rotationally driven by the motor, the orientation of the outlet flap (93) is adjusted, and thus the orientation of the air blown from the air outlet (92) is changed. The indoor unit (91) includes an indoor control unit (not shown) for controlling the outlet flap (93) and the like. The indoor control unit may be configured as part of the control unit (70) described later.

<User Interface>

In this embodiment, the wireless communication terminal (5) provided as a user interface may be, e.g., a smartphone. The wireless communication terminal (5) is a terminal for the sleeping person (T) to input various types of information before sleeping. The information input to the wireless communication terminal (5) is, e.g., a start time at which the vortex ring-shaped airflow starts acting on the sleeping person (T), an end time at which the vortex ring-shaped airflow stops acting on the sleeping person (T), and the like. When the sleeping person (T) inputs the above information to the wireless communication terminal (5), a signal corresponding to the input contents is supplied to the control unit (70) described later.

<Control Unit>

The control unit (70) may include, e.g., a microcomputer and a memory device that stores software for operating the microcomputer. The control unit (70) is connected to the vortex ring generation device (20) in a wired or wireless manner to control the vortex ring generation device (20). The control unit (70) may be connected to the lighting device (50), the imaging unit (22), the position specifying unit (37), and the air conditioning device (90), and may be configured to control these components.

The control unit (70) may be provided in the vortex ring generation device (20) or may be provided separately from the vortex ring generation device (20). Alternatively, the control unit (70) may be provided in the wireless communication terminal (5). When the control unit (70) also performs air conditioning control, the control unit (70) may be provided in an air conditioning control unit or a remote controller of the air conditioning device (90). Alternatively, the control unit (70) may be provided in a server connected to a local network or the Internet or may be provided in various communication terminals (portable terminal, personal computer, and the like).

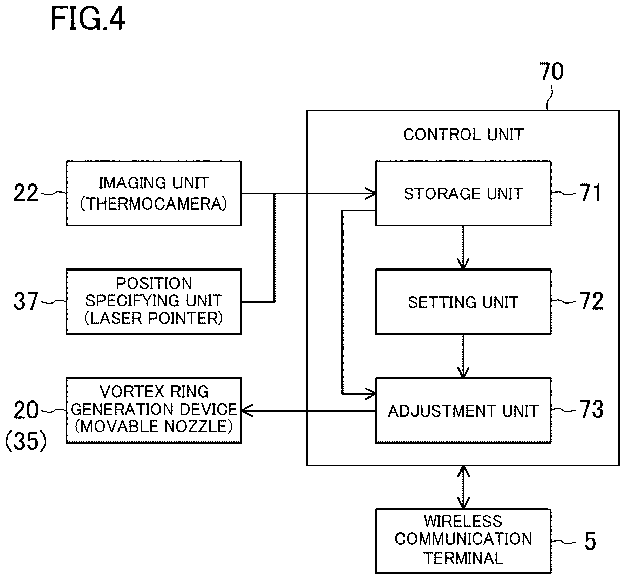

As shown in FIG. 4, the control unit (70) mainly has a storage unit (71), a setting unit (72), and an adjustment unit (73). The control unit (70) is configured to be capable of communicating information with each of the vortex ring generation device (20), the imaging unit (22), the position specifying unit (37), and the wireless communication terminal (5). The control unit (70) controls the operation of the vortex ring generation device (20), and controls e.g., the direction of the movable nozzle (35) as an actuator. When the control unit (70) controls air conditioning as well, the control unit (70) is configured to be capable of communicating information with the air conditioning device (90), and controls, e.g., the direction of the outlet flap (92) as an actuator.

The storage unit (71) mainly stores image information acquired by the imaging unit (22), position information acquired using the position specifying unit (37), and the like.

The setting unit (72) extracts, from the image information and the position information in the storage unit (71), a relationship between four or more different position coordinates in the sleeping space (S) and the directions of the movable nozzle (35) each corresponding to the four or more different position coordinates; and uses the extracted relationship to set the transformation characteristic of transformation of any position coordinates in the sleeping space (S) into the direction of the movable nozzle (35).

The adjustment unit (73) uses the position coordinates of the sleeping person (T) in the sleeping space (S) and the transformation characteristic to adjust the direction of the movable nozzle (35) so that the vortex ring hits the sleeping person (T). The adjustment unit (73) may acquire the position coordinates of the sleeping person (T) in the sleeping space (S) from the amount of each feature (e.g., luminance, heat, motion, and the like) on the image acquired by the imaging unit (22).

<Control of Direction of Actuator>

In this embodiment, in a system configuration where the imaging unit (22) and the actuator (e.g., movable nozzle (35) or outlet flap (93)) are installed at different positions, the actuator is directed toward the target (e.g., sleeping person (T)) based on the image information acquired by the imaging unit (22). This enables a vortex ring (air cannon) to be discharged toward the sleeping person (T), and also enables the wind of the air conditioner to hit a target position.

The control unit (70) of this embodiment controls by a homography the direction of the movable nozzle (35) located at a position different from that of the imaging unit (22). Specifically, the direction of the actuator can be controlled using a homography on the premise that "the target moves on the same plane" and "the direction of the actuator is replaced with virtual plane coordinates." The homography control can be performed, and thus as compared to the conventional techniques, the user has a lighter load of e.g., a system introduction while the positional relationship between the imaging unit (22) and the actuator such as the movable nozzle (35) can be freely set.

When the imaging unit as a sensor and the actuator are located at different positions, it is necessary to associate sensor information (target coordinates in the image captured by the imaging unit) with the actuator operation to control the operation of the actuator with respect to the target recognized by the sensor (i.e., to perform control to make the actuator directed to the target).

It is possible to associate the sensor information on the target with the actuator operation by measurement of the "positional/angular relationship between the sensor and the target" and the "positional/angular relationship between the sensor and the actuator." However, the measurement of the position/angle of each of the sensor, the actuator, and the target causes heavy loads on the user.

On the other hand, if the sensor and the actuator are integrated together to reduce the number of measurement points, the "positional/angular relationship between the sensor and the actuator" is fixed, and the measurement thereof is not required. However, in this case, there is another problem that the sensor and the actuator cannot be installed at free positions.

Thus, it is desirable that the sensor and the actuator can be installed at free positions and the user can easily associate the sensor with the actuator. Then, the inventors of the present application have conceived an idea of introducing the concept of a virtual plane to the actuator to enable simple association using a homography for the target moving in plane. Note that the actuator is not an imaging unit and thus does not have an imaging range or an imaging plane. Thus, the ideas of using a homography generally used in image processing and using a homography to reduce loads on the user cannot be easily conceived.

A homography is projection of a plane onto another plane by using projective transformation, and is used for, e.g., deformation of a two-dimensional image. When a pattern drawn on the same plane is photographed by two cameras placed at different positions defined by coordinates A and coordinates B (hereinafter, an image photographed at the coordinates A will be referred to as an image A, and an image photographed at the coordinates B will be referred to as an image B), the shape and perspective (expansion and contraction) of the pattern are different between the images A and B. In general, a homography can show how the appearance of the pattern or the like changes between the image A and the image B due to the position difference between the coordinates A and the coordinates B. Here, for a homography, a homography transformation matrix is required.

A homography transformation matrix can be calculated by measuring from where to where the coordinates of four different points move. Specifically, in general, calculation of a homography transformation matrix can be done by obtaining four sets of relationships of four different points, where in each of the four sets of relationships, one of the four different points present at coordinates (X, Y) in image A is present at coordinates (X', Y') in image B. Calculation of a homography transformation matrix does not depend on the positions and angles of the coordinates A and the coordinates B, and thus can be used in any case.

However, the actuator is not an imaging unit, and thus the control by a homography cannot be performed directly. Then, the inventors of the present application have found that, on the assumption that a virtual camera is placed at the installation coordinates of the actuator and there is a virtual plane captured by the virtual camera, the control by a homography can be performed by transforming the direction of the actuator into the coordinates on the virtual plane. That is, the homography transformation matrix can be calculated and the control using the homography can be performed by acquiring four sets of the relationship between the "coordinates of the target in the image recognized by the sensor" and the "coordinates on the virtual plane calculated by the transformation where the actuator is directed to the target". The acquisition of four sets of the relationship and the calculation of the homography transformation matrix (hereinafter also referred to as transformation characteristic calculation) will be described in detail below. The method (hereinafter also referred to as calibration processing) of the present disclosure imposes fewer loads on the user than when the position/angle of each of the sensor, the actuator, and the target are measured.

<Calibration Processing>

The calibration processing of the present disclosure is implemented in the following order: e.g., (1) designation by the user, (2) acquisition of four sets of the relationship, (3) transformation characteristic calculation, (4) operation confirmation, and (5) recalibration/transformation characteristic correction. Among these processes, implementation of (1) designation by the user, (4) operation confirmation, and (5) recalibration/transformation characteristic correction is optional. One or more methods of (2) acquisition of four sets of the relationship are selected according to the system configuration or the like. Further, (5) recalibration/transformation characteristic correction can be implemented independently of the calibration processing.

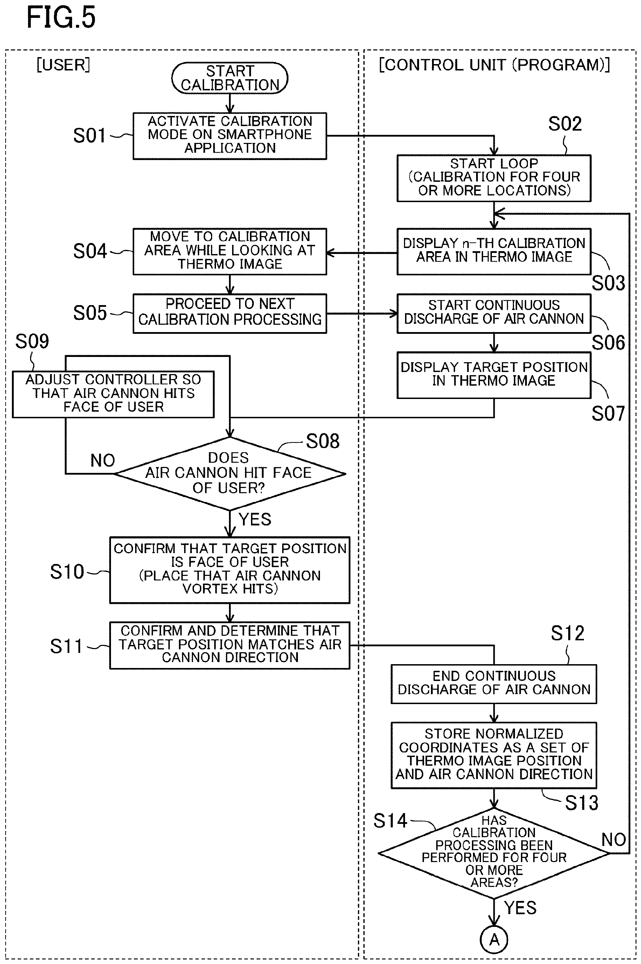

One example of the calibration processing by the control system (10) of this embodiment will be described below with reference to FIGS. 5 to 8.

First, in Step S 1, the user activates a calibration mode on an application (hereinafter also referred to as a smartphone application) of the wireless communication terminal (5). The user may be the sleeping person (T) himself or herself.

Next, in Step S2, the control unit (70) starts loop processing for acquiring four or more sets of the relationship between the "coordinates of the target (e.g., face of the sleeping person (T)) in the image recognized by the sensor (imaging unit (22)) " and the "coordinates on the virtual plane calculated by the transformation, where the actuator (movable nozzle (35)) is directed to the target."

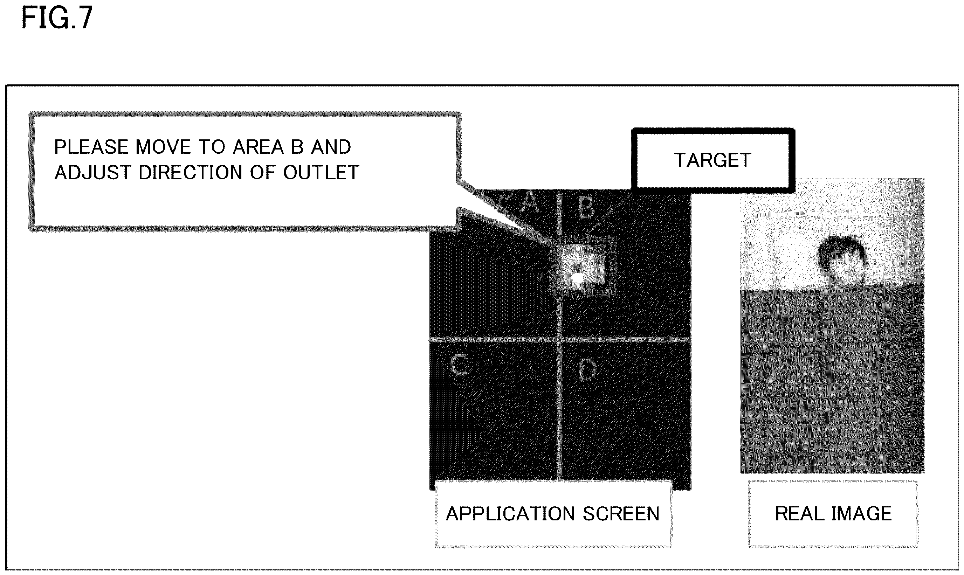

Next, in Step S3, the control unit (70) operates so that the wireless communication terminal (5) displays the image (hereinafter also referred to as a thermo image) captured by the imaging unit (22) together with a first calibration area (see FIG. 7).

Next, in Step S4, the user (sleeping person (T)) moves to the first calibration area while looking at the thermo image displayed on the wireless communication terminal (5). Then, in Step S5, the user gives an instruction on the smartphone application so that the calibration processing go on to the next.

Next, in Step S6, the control unit (70) operates so that the vortex ring generation device (20) starts continuous discharge of the vortex ring (air cannon). Then, in Step S7, the control unit (70) operates so that the target position is displayed in the thermo image (see FIG. 7).

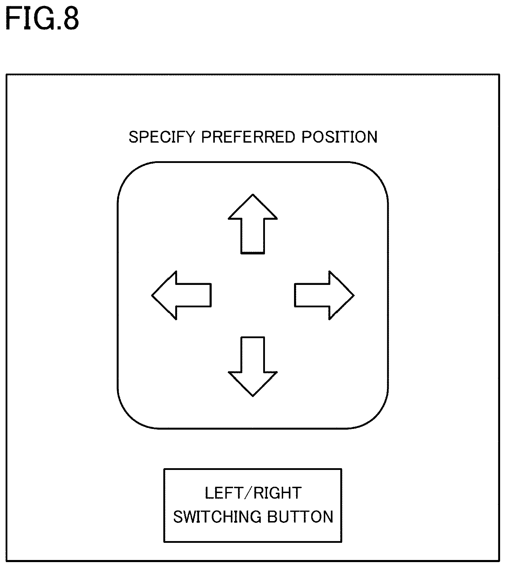

Next, in Step S8, the user, i.e., the sleeping person (T), determines whether the air cannon hits a face of the user. If the air cannon does not hit the face of the user, in Step S9, the user uses the wireless communication terminal (5) for the control unit (70) to adjust the direction of the movable nozzle (35) (i.e., vortex ring outlet (36)) so that the air cannon hits the user. Here, the wireless communication terminal (5) may display some things on a screen as shown in FIG. 8 to adjust the direction of the vortex ring outlet (36). If the air cannon hits the face of the user, in Step S10, the user confirms that the target position is his or her own face (the place that the air cannon hits). Then, in Step S11, the user confirms and determines on the smartphone application that the target position matches the direction of the movable nozzle (35) (hereinafter also referred to as an air cannon direction).

Next, in Step S12, the control unit (70) operates so that the vortex ring generation device (20) ends the continuous discharge of the air cannon. Then, in Step S13, the control unit (70) operates so that the storage unit (71) stores coordinates (hereinafter also referred to as normalized coordinates) which are a set of the target position in the thermo image (hereinafter also referred to as a thermo image position) and the air cannon direction.

Next, in Step S14, the control unit (70) determines whether the calibration processing has been performed for the predetermined four or more calibration areas, and the processing from Step S03 to Step S13 is performed repeatedly until the calibration processing is performed for the predetermined number of calibration areas.

Next, in Step S15, the control unit (70) decides whether additional calibration (e.g., calibration processing for a fifth calibration area) is not necessary. If additional calibration is not necessary, in Step S 16, the control unit (70) (specifically, setting unit (72)) calculates a transformation characteristic (hereinafter also referred to as calibration data) of transformation of any position coordinates in the sleeping space (S) into the direction of the movable nozzle (35) based on the sets of normalized coordinates obtained for the n ($n \geq 4$) calibration areas. The transformation characteristic calculation will be described in detail later. Then, in Step S 17, the control unit (70) (i.e., adjustment unit (73)) uses the calibration data to perform temporary operation of the movable nozzle (35). That is, the adjustment unit (73) uses the position coordinates of the sleeping person (T) (specifically, his or her face) in the sleeping space (S) and the calibration data to adjust the direction of the movable nozzle (35) so that the air cannon hits the sleeping person (T).

Next, in Step S18, the user, i.e., the sleeping person (T), confirms whether the adjustment unit (73) enables the air cannon direction to track the sleeping person (T) automatically. Then, in Step S 19, the user determines whether the calibration has been performed correctly based on a result of confirmation of automatic tracking. If the calibration has been performed correctly, the user designates on the smartphone application the calibration as performed correctly. Then, in Step S20, the control unit (70) operates so that the storage unit (71) stores a calibration result (calibration data obtained in Step S 16), and the wireless communication terminal (5) shows on its display that the calibration processing is completed. Then, the calibration processing is completed.

If the calibration has not been performed correctly, the user designates on the smartphone application the calibration as not performed correctly. Then, in Step S21, the control unit (70) decides which one of recalibration and additional calibration is to be performed. If it is decided that recalibration is to be performed, in Step S22, the control unit (70) switches to a recalibration mode. Then, in Step S23, the control unit (70) resets the calibration data and performs the processing of and after Step S02 again.

If the control unit (70) decides in Step S21 that additional calibration is to be performed, or if the control unit (70) decides in Step S15 that additional calibration is necessary, in Step S24, the control unit (70) switches to an additional calibration mode. Then, in Step S25, the control unit (70) adds to and changes the number of calibration areas (i.e., the number of loops of the processing in Steps S03 to S13), and performs the processing of and after Step S03 for the added calibration area(s).

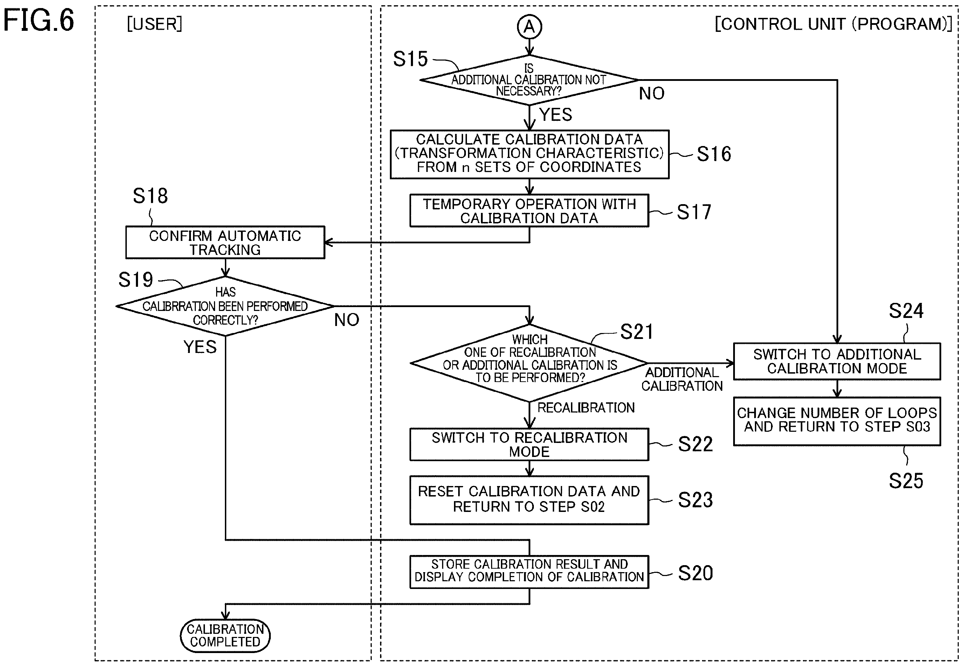

In the example shown in FIGS. 5 and 6, the recalibration or the additional calibration (addition of the calibration data) can be performed after the calibration processing has been once completed. Alternatively, for example, partial recalibration, manual correction, or automatic correction may be performed.

The partial recalibration means recalibrating for at least one calibration area, and for example, includes recalibrating again for a third calibration area. This enables recalculation of the transformation characteristic by recalibrating for only a necessary calibration area instead reacquiring all pieces of data from the beginning in order to correct the transformation characteristic.

The manual correction means that the user changes the calibration data to any value for at least one calibration area. For example, since the calibration by the control unit (70) provides insufficient automatic tracking so that there are some places that air cannons are unlikely to hit, the manual correction includes the user changing the numerical value of the calibration data for a second calibration area. Since the calibration data can be manually changed to any value, the user or an installer can adjust the calibration data according to their location.

The automatic correction means that when there are some external influences (e.g., deviation of the hit point of an air cannon due to natural wind), the imaging unit (22) is used to estimate an external influence amount and then the control unit (70) corrects the calibration data based on the estimated external influence amount.

In the additional calibration, as described above, the calibration area can be added later. The calibration processing for at least four locations enables obtaining the calibration data necessary for the homography transformation, and the calibration processing for additional calibration areas can also improve the accuracy of the calibration data. The additional calibration can improve the calibration accuracy without performing the calibration processing again from the beginning for five or more calibration areas.

In addition, as shown in the example in FIGS. 5 and 6, when the user uses, e.g., the smartphone application to make various calibration instructions remotely, the user convenience is improved.

Further, the control unit (70) (specifically, setting unit (72)) may be configured to enable the user to designate an area in the image captured by the imaging unit (22), where the designated area is used for calculation of the calibration data (setting of the transformation characteristic). Such designation by the user is considered effective in the following cases.

For example, when, from the image acquired by the imaging unit (22), the calibration areas on the same plane are estimated using, e.g., edge recognition, and then the control unit (70) performs the calibration processing in the estimated calibration areas, the calibration data is inaccurate in some cases because the calibration areas are estimated with different planes (e.g., a floor surface, a bed surface, and the like) mixed in the edge recognition. In such a case, the calibration processing cannot be performed appropriately without any designation. Thus, before starting the calibration processing, the user may designate "which part of the area the target position covers" or "which part of the area should be used for the calibration processing." Alternatively, when it has been found after the calibration processing that the calibration data is inaccurate, the user may designate again the area of the captured image used for the calculation of the calibration data in order to recalculate the calibration data.

<Transformation Characteristic Calculation>

A transformation characteristic calculation method in the calibration processing performed by the control system (10) of this embodiment will be described below.

As described above, the coordinate relationship between one plane and another plane can be expressed by the homography transformation matrix (i.e., transformation characteristic) as shown in Expressions 1 to 3 below.

[Formula 1]

$$\begin{bmatrix} X' \\ Y' \\ W' \end{bmatrix} = H' \begin{bmatrix} x \\ y \\ 1 \end{bmatrix} = \begin{bmatrix} h'_{00} & h'_{01} & h'_{02} \\ h'_{10} & h'_{11} & h'_{12} \\ h'_{20} & h'_{21} & h'_{22} \end{bmatrix} \begin{bmatrix} x \\ y \\ 1 \end{bmatrix} \quad \cdots \text{(Expression 1)}$$

[Formula 2]

$$\begin{bmatrix} x' \\ y' \end{bmatrix} = \begin{bmatrix} X'/W' \\ Y'/W' \end{bmatrix} \quad \cdots \text{(Expression 2)}$$

[Formula 3]

$$H' = \begin{bmatrix} h'_{00} & h'_{01} & h'_{02} \\ h'_{10} & h'_{11} & h'_{12} \\ h'_{20} & h'_{21} & h'_{22} \end{bmatrix} \quad \cdots \text{(Expression 3)}$$

Here, $(x, y)$ in Expression 1 indicates coordinates before transformation, $(x', y')$ in Expression 2 indicates coordinates after transformation, and H' in Expression 3 indicates a homography transformation matrix. If the homography transformation matrix H' in Expression 3 is known, any coordinates can be transformed using Expressions 1 and 2.

Since the homography transformation is invariant to scale, the homography transformation matrix H' in Expression 3 can be replaced with a homography transformation matrix H in Expression 4 below.

[Formula 4]

$$H = \begin{bmatrix} h_{00} & h_{01} & h_{02} \\ h_{10} & h_{11} & h_{12} \\ h_{20} & h_{21} & 1 \end{bmatrix} = \frac{1}{h'_{22}} \begin{bmatrix} h'_{00} & h'_{01} & h'_{02} \\ h'_{10} & h'_{11} & h'_{12} \\ h'_{20} & h'_{21} & h'_{22} \end{bmatrix} = \frac{1}{h'_{22}} H' \quad \cdots \text{(Expression 4)}$$

If the homography transformation matrix H in Expression 4 is used, the homography transformation in Expression 1 is expressed as shown in Expression 5 below (H' in Expression 1 is replaced with H).

[Formula 5]

$$\begin{bmatrix} X' \\ Y' \\ W' \end{bmatrix} = H \begin{bmatrix} x \\ y \\ 1 \end{bmatrix} = \begin{bmatrix} h_{00} & h_{01} & h_{02} \\ h_{10} & h_{11} & h_{12} \\ h_{20} & h_{21} & 1 \end{bmatrix} \begin{bmatrix} x \\ y \\ 1 \end{bmatrix} \quad \cdots \text{(Expression 5)}$$

Thus, parameters necessary for the homography transformation are eight parameters: $h_{00}$, $h_{01}$, $h_{02}$, $h_{10}$, $h_{11}$, $h_{12}$, $h_{20}$, and $h_{21}$ shown in Expressions 4 and 5.

From Expression 5 using the homography transformation matrix H and Expression 2, the relationship between the coordinates $(x_0, y_0)$ before the transformation and the coordinates $(x_0', y_0')$ after the transformation is expressed as shown in Expression 6 below.

[Formula 6]

$$\begin{bmatrix} x'_0 \\ y'_0 \end{bmatrix} = \begin{bmatrix} x_0 & y_0 & 1 & 0 & 0 & 0 & -x_0 x'_0 & -y_0 x'_0 \\ 0 & 0 & 0 & x_0 & y_0 & 1 & -x_0 y'_0 & -y_0 y'_0 \end{bmatrix} \begin{bmatrix} h_{00} \\ h_{01} \\ h_{02} \\ h_{10} \\ h_{11} \\ h_{12} \\ h_{20} \\ h_{21} \end{bmatrix} \quad \cdots \text{(Expression 6)}$$

The relationships of three different sets between the coordinates $(x_1, y_i)$, $(x_2, y_2)$, $(x_3, y_3)$ before the transformation and the coordinates $(x_1', y_1')$, $(x_2', y_2')$, $(x_3', y_3')$ after the transformation can also be calculated similarly to Expression 6, and the relationships of total four sets between the coordinates before and after the transformation can be expressed as shown in Expression 7 below.

[Formula 7]

$$\begin{bmatrix} x'_0 \\ y'_0 \\ x'_1 \\ y'_1 \\ x'_2 \\ y'_2 \\ x'_3 \\ y'_3 \end{bmatrix} = \begin{bmatrix} x_0 & y_0 & 1 & 0 & 0 & 0 & -x_0x'_0 & -y_0x'_0 \\ 0 & 0 & 0 & x_0 & y_0 & 1 & -x_0y'_0 & -y_0y'_0 \\ x_1 & y_1 & 1 & 0 & 0 & 0 & -x_1x'_1 & -y_1x'_1 \\ 0 & 0 & 0 & x_1 & y_1 & 1 & -x_1y'_1 & -y_1y'_1 \\ x_2 & y_2 & 1 & 0 & 0 & 0 & -x_2x'_2 & -y_2x'_2 \\ 0 & 0 & 0 & x_2 & y_2 & 1 & -x_2y'_2 & -y_2y'_2 \\ x_3 & y_3 & 1 & 0 & 0 & 0 & -x_3x'_3 & -y_3x'_3 \\ 0 & 0 & 0 & x_3 & y_3 & 1 & -x_3y'_3 & -y_3y'_3 \end{bmatrix} \begin{bmatrix} h_{00} \\ h_{01} \\ h_{02} \\ h_{10} \\ h_{11} \\ h_{12} \\ h_{20} \\ h_{21} \end{bmatrix} \quad \cdots \text{(Expression 7)}$$

Here, to obtain the eight parameters $h_{00}$, $h_{01}$, $h_{02}$, $h_{10}$, $h_{11}$, $h_{12}$, $h_{20}$, $h_{21}$ necessary for the homography transformation, Expression 7 is expressed as $A = B \cdot C$, where the left side of Expression 7 is A, the two-dimensional matrix on the right side is B, and the one-dimensional matrix (the eight parameters described above) on the right side is C. Then, to obtain C, both sides of $A = B \cdot C$ are multiplied by the inverse matrix $B^{-1}$ of B. Then, $C = B^{-1} \cdot A$ is obtained.

Each matrix element of $B^{-1} \cdot A$ necessary for obtaining C is obtained from "four sets of combinations of the coordinates before the transformation and the coordinates after the transformation" as shown in Expression 7. That is, by obtaining the "four sets of combinations of the coordinates before the transformation and the coordinates after the transformation," the homography transformation matrix (transformation characteristic) can be calculated, i.e., the calibration processing can be performed.

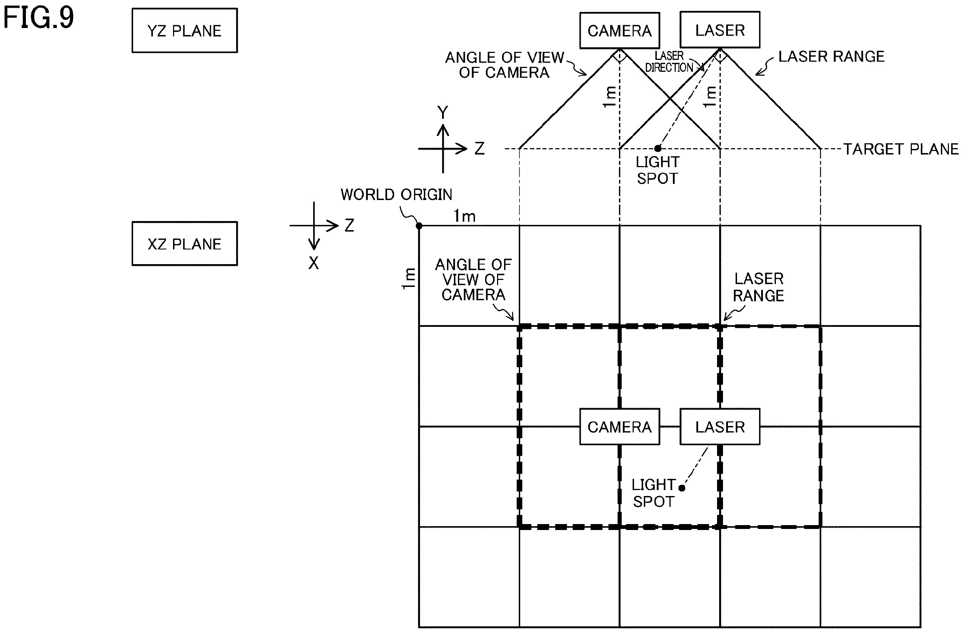

FIG. 9 shows one example of the positional relationship among the imaging unit (22) (hereinafter simply referred to as a camera), the position specifying unit (37) (hereinafter simply referred to as a laser), and a plane (hereinafter simply referred to as a target plane) including the target (e.g., the face of the sleeping person (T)) in the calibration processing. The direction of the laser is in conjunction with the direction of the actuator (e.g., movable nozzle (35)). In the positional relationship shown in FIG. 9, the camera and the laser are installed directing downward on the ceiling of the indoor space, and the target is positioned on the floor. In FIG. 9, a point pointed to by the laser is referred to as a "light spot." As shown in FIG. 9, with reference to the origin (world origin) of any world coordinate system (X, Y, Z), the world coordinates of the camera are defined as (2, 1, 2) and the world coordinates of the laser are defined as (2, 1, 4). The unit of the size of each coordinate is [m]. The angle of view of the camera is 90 degrees in the vertical and horizontal directions (X direction and Z direction) and the movable area of the orientation of the laser (laser direction) is 90 degrees in the vertical and horizontal directions (X direction and Z direction).

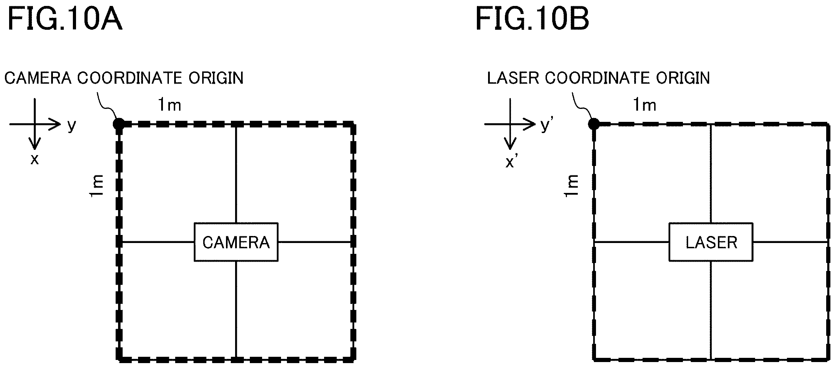

FIGS. 10A and 10B show a camera coordinate system (x, y) defined with reference to the angle of view of the camera and a laser coordinate system (x', y') defined with reference to the laser movable area, respectively.

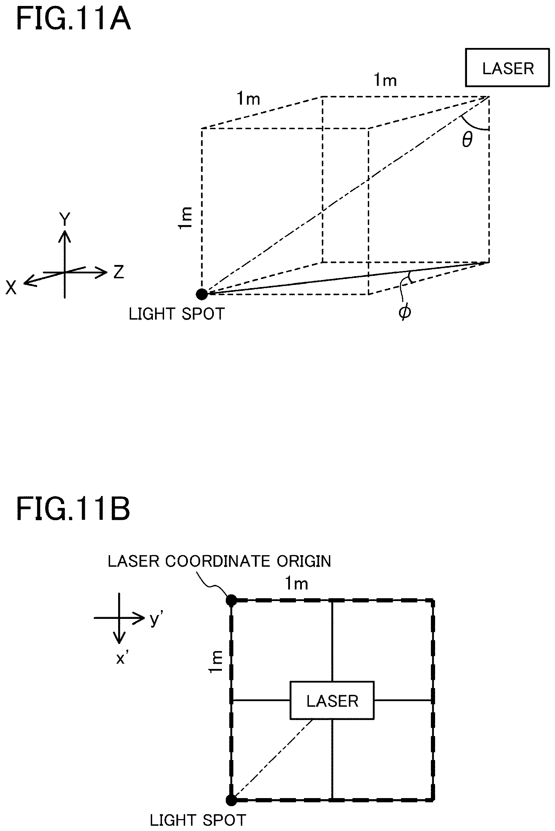

Next, an example of transformation of a laser angle into coordinates on the virtual plane will be described. If the XZ plane shown in FIG. 9 is the virtual plane, the coordinate system of the virtual plane coincides with the laser coordinate system shown in FIG. 10B. If the direction of the laser is expressed by $(\varphi, \theta)$ defined as shown in FIG. 11A, the coordinates of the light spot are (2, 0) in the laser coordinate system as shown in FIG. 11B when the laser is directed with $\varphi = 1/4 \cdot \pi$ [rad] = 45 [degrees] and $\theta = \arctan(\sqrt{2})$ [rad] $\approx 54.7$ [degrees]. In this manner, the laser angle and the virtual plane coordinates can be mutually transformed.

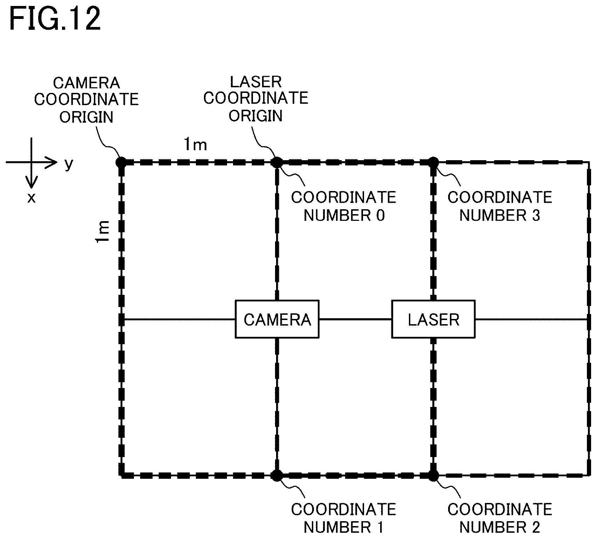

Next, a calibration process for calculating the homography transformation matrix will be described. To calculate the homography transformation matrix, it is necessary to obtain four sets of combinations of the coordinates before the transformation and the coordinates after the transformation. The following description provides an example of calculation of the homography transformation matrix for transforming the camera coordinates into the laser coordinates, where the coordinates before the transformation are the camera coordinates, and the coordinates after the transformation are the laser coordinates. The camera coordinates (x, y) and the laser coordinates (x', y') of the light spot when the laser is directed to each of positions having coordinate numbers 0 to 3 on the target plane shown in FIG. 12 are as shown in Table 1 below.

[Table 1]

| Coordinate Number | Camera Coordinates (x, y) | Laser Coordinates (x', y') |
|---|---|---|
| 0 | $(x_0, y_0) = (0, 1)$ | $(x'_0, y'_0) = (0, 0)$ |
| 1 | $(x_1, y_1) = (2, 1)$ | $(x'_1, y'_1) = (2, 0)$ |
| 2 | $(x_2, y_2) = (2, 2)$ | $(x'_2, y'_2) = (2, 1)$ |
| 3 | $(x_3, y_3) = (0, 2)$ | $(x'_3, y'_3) = (0, 1)$ |

If the calibration information shown in Table 1 is substituted into Expression 7 and rearranged, Expression 8 below is obtained.
[Formula 8]

$$
\begin{bmatrix} 0 \\ 0 \\ 2 \\ 0 \\ 2 \\ 1 \\ 0 \\ 1 \end{bmatrix}
=
\begin{bmatrix}
0 & 1 & 1 & 0 & 0 & 0 & 0 & 0 \\
0 & 0 & 0 & 0 & 1 & 1 & 0 & 0 \\
2 & 1 & 1 & 0 & 0 & 0 & -4 & -2 \\
0 & 0 & 0 & 2 & 1 & 1 & 0 & 0 \\
2 & 2 & 1 & 0 & 0 & 0 & -4 & -4 \\
0 & 0 & 0 & 2 & 2 & 1 & -2 & -2 \\
0 & 2 & 1 & 0 & 0 & 0 & 0 & 0 \\
0 & 0 & 0 & 0 & 2 & 1 & 0 & -2
\end{bmatrix}
\begin{bmatrix} h_{00} \\ h_{01} \\ h_{02} \\ h_{10} \\ h_{11} \\ h_{12} \\ h_{20} \\ h_{21} \end{bmatrix}
\quad \cdots \text{(Expression 8)}
$$

From Expression 8, the inverse matrix $B^{-1}$ is calculated as shown in Expression 9 below.
[Formula 9]

$$
B^{-1} =
\begin{bmatrix}
0 & 1 & 1 & 0 & 0 & 0 & 0 & 0 \\
0 & 0 & 0 & 0 & 1 & 1 & 0 & 0 \\
2 & 1 & 1 & 0 & 0 & 0 & -4 & -2 \\
0 & 0 & 0 & 2 & 1 & 1 & 0 & 0 \\
2 & 2 & 1 & 0 & 0 & 0 & -4 & -4 \\
0 & 0 & 0 & 2 & 2 & 1 & -2 & -2 \\
0 & 2 & 1 & 0 & 0 & 0 & 0 & 0 \\
0 & 0 & 0 & 0 & 2 & 1 & 0 & -2
\end{bmatrix}^{-1}
=
\begin{bmatrix}
-1 & -1 & 1 & 1 & -0.5 & -1 & 0.5 & 1 \\
-1 & 0 & 0 & 0 & 0 & 0 & 1 & 0 \\
2 & 0 & 0 & 0 & 0 & 0 & -1 & 0 \\
0 & -0.5 & 0 & 0.5 & 0 & 0 & 0 & 0 \\
-1 & -1 & 1 & 0 & -1 & 0 & 1 & 1 \\
1 & 2 & -1 & 0 & 1 & 0 & -1 & -1 \\
0 & -0.5 & 0 & 0.5 & 0 & -0.5 & 0 & 0.5 \\
-0.5 & 0 & 0.5 & 0 & -0.5 & 0 & 0.5 & 0
\end{bmatrix}
\quad \cdots \text{(Expression 9)}
$$

If the inverse matrix $B^{-1}$ shown in Expression 9 and A as the left side of Expression 7 are substituted into the relational expression of $C = B^{-1} \cdot A$, C, i.e., the eight parameters $h_{00}$, $h_{01}$, $h_{02}$, $h_{10}$, $h_{11}$, $h_{12}$, $h_{20}$, $h_{21}$ necessary for the homography transformation, are calculated as shown in Expression 10 below.
[Formula 10]

$$
C = B^{-1}A =
\begin{bmatrix}
-1 & -1 & 1 & 1 & -0.5 & -1 & 0.5 & 1 \\
-1 & 0 & 0 & 0 & 0 & 0 & 1 & 0 \\
2 & 0 & 0 & 0 & 0 & 0 & -1 & 0 \\
0 & -0.5 & 0 & 0.5 & 0 & 0 & 0 & 0 \\
-1 & -1 & 1 & 0 & -1 & 0 & 1 & 1 \\
1 & 2 & -1 & 0 & 1 & 0 & -1 & -1 \\
0 & -0.5 & 0 & 0.5 & 0 & -0.5 & 0 & 0.5 \\
-0.5 & 0 & 0.5 & 0 & -0.5 & 0 & 0.5 & 0
\end{bmatrix}
\begin{bmatrix} 0 \\ 0 \\ 2 \\ 0 \\ 2 \\ 1 \\ 0 \\ 1 \end{bmatrix}
=
\begin{bmatrix} 1 \\ 0 \\ 0 \\ 0 \\ 1 \\ -1 \\ 0 \\ 0 \end{bmatrix}
=
\begin{bmatrix} h_{00} \\ h_{01} \\ h_{02} \\ h_{10} \\ h_{11} \\ h_{12} \\ h_{20} \\ h_{21} \end{bmatrix}
\quad \cdots \text{(Expression 10)}
$$

From the result shown in Expression 10, the homography transformation matrix H is calculated as shown in Expression 11 below.
[Formula 11]

$$
H =
\begin{bmatrix}
h_{00} & h_{01} & h_{02} \\
h_{10} & h_{11} & h_{12} \\
h_{20} & h_{21} & 1
\end{bmatrix}
=
\begin{bmatrix}
1 & 0 & 0 \\
0 & 1 & -1 \\
0 & 0 & 1
\end{bmatrix}
\quad \cdots \text{(Expression 11)}
$$

Finally, an example of transformation of any coordinates using the calculated homography transformation matrix H will be described.
The homography transformation using the homography transformation matrix H uses Expressions 5 and 2.

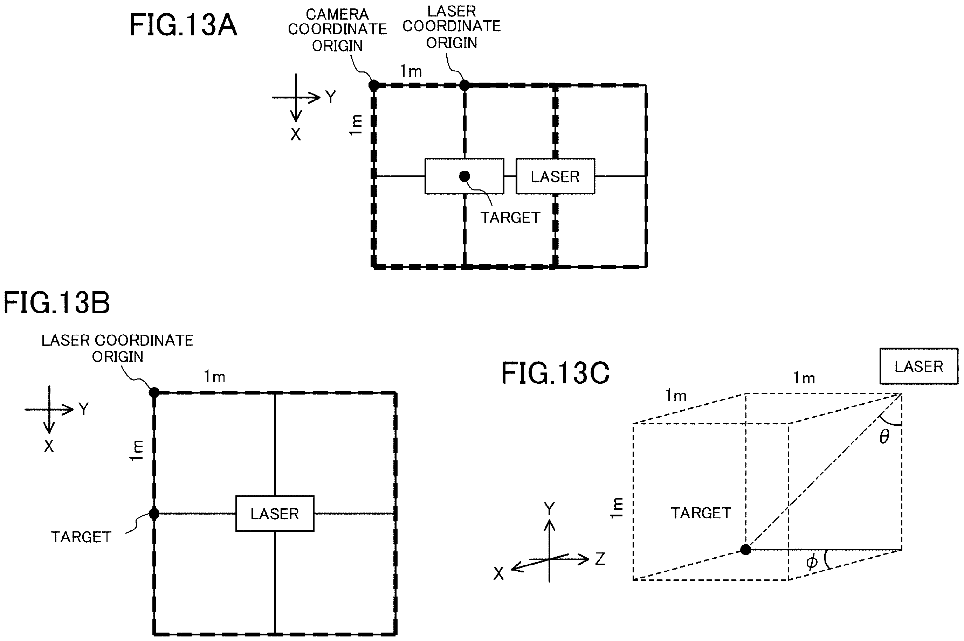

Here, (x, y) are the camera coordinates, (x', y') are the laser coordinates, and H is the homography transformation matrix H shown in Expression 11. For example, if the camera coordinates (x, y) = (1, 1) of the target shown in FIG. 13A are substituted into Expressions 5 and 2, Expressions 12 and 13 below are obtained and the camera coordinates are transformed into the laser coordinates (x', y') = (1, 0) of the target shown in FIG. 13B.

[Formula 12]

$$\begin{bmatrix} X' \\ Y' \\ W \end{bmatrix} = \begin{bmatrix} 1 & 0 & 0 \\ 0 & 1 & -1 \\ 0 & 0 & 1 \end{bmatrix} \begin{bmatrix} 1 \\ 1 \\ 1 \end{bmatrix} = \begin{bmatrix} 1 \\ 0 \\ 1 \end{bmatrix} \quad \cdots \text{(Expression 12)}$$

[Formula 13]

$$\begin{bmatrix} x' \\ y' \end{bmatrix} = \begin{bmatrix} 1/1 \\ 0/1 \end{bmatrix} = \begin{bmatrix} 1 \\ 0 \end{bmatrix} \quad \cdots \text{(Expression 13)}$$

The direction of the laser to the target positioned at the laser coordinates (x', y') = (1, 0) is $\varphi$ = 90 [degrees] and $\theta$ = 45 [degrees] as shown in FIG. 13C.

As described above, with the camera coordinates of the target recognized by the camera and the homography transformation matrix, the laser, i.e., the actuator, can be directed to the target.

<Features of Embodiment>

The control system (10) of this embodiment includes the imaging unit (22) that acquires the image of the sleeping space (target plane) (S) including the sleeping person (target) (T), the movable nozzle (actuator) (35) that provides the physical action to the target (T), and the control unit (70) that controls the actuator (35). The control unit (70) includes the setting unit (72) and the adjustment unit (73). The setting unit (72) uses the relationship between four or more different position coordinates on the target plane and the directions of the actuator (35) corresponding to the four or more different position coordinates to set the transformation characteristic (calibration data) of transformation of any position coordinates on the target plane into the direction of the actuator (35). The adjustment unit (73) uses the position coordinates of the target (T) on the target plane and the calibration data to adjust the direction of the actuator (35) so that the physical action is provided to the target (T).

According to the control system (10) of this embodiment, even when the user installs the imaging unit (22) and the actuator (35) separately at any positions, the direction of the actuator (35) can be controlled with a smaller number of procedures than that of conventional procedures without using an expensive three-dimensional imaging unit such as a stereo camera. Thus, there are fewer loads on the user.

Specifically, since a preparation for introducing the control system (10) (calibration processing) only requires measurement of the relationships among four sets of coordinates, there are fewer loads on the user as compared to conventional measurement of a three-dimensional positional relationship among an imaging unit, an actuator, and a target. That is, the direction of the actuator can be controlled with a smaller number of calibration procedures than that of conventional procedures without using a special and expensive sensor such as a stereo camera. Further, since the image information (sensor information) acquired by the imaging unit (22) is transformed into the virtual plane coordinates using the homography in order to control the direction of the actuator (35), there are still further fewer loads on the user as compared to a conventional control of the direction of an actuator by applying a trigonometric function to a three-dimensional positional relationship among an imaging unit, an actuator, and a target.

Further, according to the control system (10) of this embodiment, even when the user installs the imaging unit (22) and the actuator (35) separately at any positions, the above advantage of fewer loads on the user can be achieved.

Note that if the imaging unit (22) and the actuator (35) can be installed at different positions, this can prevent, for example, the user from being bothered by operation sounds of the actuator (35) and the like. In addition, a separately sold sensor purchased and installed as the imaging unit (22) in an existing system can additionally function to control the direction of the actuator (35). Alternatively, a sensor of an existing system (e.g., a sensor of an installed air conditioner), which is used as the imaging unit (22) and retrofitted with an actuator, enables the direction control. Further, when a sensor and an actuator are retrofitted or newly installed, the sensor is easy to install at a position that produces less blind spots of the sensor and enables the function of the sensor to be used effectively (e.g., a position that makes the target clearly visible and enables the target to be sensed so that action histories can be acquired in detail).

On the other hand, when the positional relationship between the sensor and the actuator is fixed, this is advantageous in that the sensor and the actuator are made close to each other, thereby contributing to downsizing. However, when the sensor is intended to be installed at a position that makes the target clearly visible (e.g., a position above a bed, a position close to the face of a sleeping person, and the like), the actuator also needs to be installed at a position close to the sensor or close to the sleeping person. As a result, for example, an operation sound of the actuator becomes disadvantageously louder for the user.

Further, when an already installed actuator is retrofitted with a separately sold sensor in order to control the direction of the actuator, the actuator, if not intended to be retrofitted with a sensor (e.g., if not having a space for attachment of a sensor, or if having difficulty in providing a certain position for attachment of a sensor), has difficulty in being retrofitted with a sensor. Further, in this case, an installation position of the sensor is limited to an installation position of the actuator, and thus it is difficult to install the sensor at a position at which the target is easily recognized.

The control system (10) of this embodiment may further include the position specifying unit (37) that points to one point on the target plane, and the setting unit (72) may specify the direction of the actuator (35) corresponding to the point pointed to by the position specifying unit (37). In this manner, the position specifying unit (37) is used to easily specify the direction of the actuator (35). The position specifying unit (37) may be, e.g., a laser pointer. The position specifying unit (37) and the actuator (35) may be integrated with, or separated from each other.

In the control system (10) of this embodiment, the position specifying unit (37) and the actuator (35) may operate in conjunction with each other. In this manner, the position specifying unit (37) is used to accurately specify the direction of the actuator (35).

In the control system (10) of this embodiment, the setting unit (72) may specify the direction of the actuator (35) corresponding to each of the four or more different position coordinates based on a change in the physical action when the actuator (35) is driven. In this manner, the directions of the actuator (35) corresponding to the position coordinates can be easily specified.

In the control system (10) of this embodiment, the adjustment unit (73) may acquire the position coordinates of the target (T) on the target plane from the amount of a feature in the image. In this manner, the position coordinates of the target (T) can be easily and accurately acquired based on the amount of each feature such as luminance, heat, motion, and the like in the image.

In the control system (10) of this embodiment, the setting unit (72) may be configured to enable the user to designate the area in the image to be used for setting the calibration data. In this manner, an image region unnecessary for setting the calibration data can be excluded.

In the control system (10) of this embodiment, the setting unit (72) may be configured to enable the user to designate the direction of the actuator (35). In this manner, the direction of the actuator (35) can be specified based on a change in the physical action when the user drives the actuator (35).

In the control system (10) of this embodiment, the actuator (35) may be an airflow control device, or specifically, the movable nozzle (35) of the vortex ring generation device (20). In this manner, in the control system for controlling the movable nozzle (35) as an airflow control device, there are fewer loads on the user without limitation to the positional relationship between the imaging unit (22) and the movable nozzle (35).

(First Variation)

The control system (10) of the above embodiment controls the direction of the movable nozzle (35) of the vortex ring generation device (20). However, the control system (10) of this variation controls the direction of the outlet flap (92) of the indoor unit (91) of the air conditioning device (90). The control system (10) of this variation uses, e.g., a camera as the imaging unit (22) and a microcomputer and a memory as the control unit (70) to acquire a camera image; recognize the coordinates of the target (e.g., sleeping person (T)); transforms the target coordinates into the angle of the outlet flap (92) using the transformation characteristic (calibration data); and controls the outlet flap (92) to the angle obtained by the transformation, thereby sending air toward the target. That is, with the transformation characteristic of "transformation of the target coordinates extracted from the camera image into the angle of the outlet flap (92) that enables winds to be sent to the target," the outlet flap (92) can be directed to the target as long as the target is on the same plane in the target space even if the target is at any position in the camera image.

In this variation, the following setup (calibration processing) is implemented to obtain the transformation characteristic. With the target coordinates in the image as (x, y) and the direction of the outlet flap (92) as $(\theta, \varphi)$ using polar coordinates, the transformation characteristic is determined from a correspondence relationship between (x, y) and $(\theta, \varphi)$. In addition, to perform an easier setup with less bother as compared with the conventional techniques, a position specifying unit (e.g., laser pointer) operating in conjunction with the outlet flap (92) is used.

First, the control unit (70) changes the direction of the outlet flap (92) to any angle $(\theta_1, \varphi_1)$. At this time, the laser pointer is also directed in the same direction, and a light spot appears on the target plane (e.g., a bed surface as the sleeping space (S)) to which the laser pointer is directed. Next, the camera captures an image of the target plane, and the image information is sent to the control unit (70). Next, the control unit (70) stores the coordinates $(x_1, y_1)$ of the light spot (the point that the laser pointer points to) in the image, and also stores the relationship between the angle $(\theta_1, \varphi_1)$ and the coordinates $(x_1, y_1)$ (a set of coordinate relationship). Similarly, the control unit (70) changes the direction of the outlet flap (92) four or more times in total and acquires four or more sets in total of coordinate relationship. Finally, the control unit (70) uses the four or more sets of coordinate relationship to obtain the transformation characteristic.

After the transformation characteristic has been obtained, the control system (10) controls the direction of the outlet flap (92) as follows, similarly to the above embodiment. First, the camera captures an image of the target plane, and the image information is sent to the control unit (70). Next, the control unit (70) recognizes the target in the image, and stores coordinates $(x_t, y_t)$ of the target in the image. Next, the control unit (70) uses the coordinates $(x_t, y_t)$ in the image and the transformation characteristic to calculate the angle $(\theta_t, \varphi_t)$ of the outlet flap (92) that enables winds to be sent to the target. Finally, the control unit (70) controls the direction of the outlet flap (92) to the angle $(\theta_t, \varphi_t)$, and sends winds from the outlet flap (92) to the target.

(Second Variation)

The control system (10) of the above embodiment controls the direction of the movable nozzle (35) of the vortex ring generation device (20). However, the control system (10) of this variation controls not only the direction of the movable nozzle (35) but also the direction of the outlet flap (92) of the indoor unit (91) of the air conditioning device (90).

When a plurality of actuators is controlled like this variation, each of the actuators may be provided with an imaging unit (camera). Alternatively, a single imaging unit may be used to control the plurality of actuators.

In this variation, for every combination of the imaging unit and the actuator, a plurality of transformation characteristics are calculated and stored, and then the transformation characteristics are switched and used according to the actuator to be controlled. The transformation characteristic (calibration data) is stored so as not to be reset even when the control system (10) is turned off.

(Third Variation)

In the control system (10) of the above embodiment, the calibration processing for four locations is performed to acquire the calibration data necessary for the homography transformation, i.e., the four sets of normalized coordinates.

In contrast, in this variation, additional calibration is performed to acquire five or more sets of normalized coordinates. If five or more sets of normalized coordinates are acquired, Expression 14 below obtained by expanding Expression 7 above is used to calculate the homography transformation matrix.

[Formula 14]

$$
\begin{bmatrix} x'_0 \\ y'_0 \\ x'_1 \\ y'_1 \\ x'_2 \\ y'_2 \\ x'_3 \\ y'_3 \\ x'_4 \\ y'_4 \\ \vdots \end{bmatrix}
=
\begin{bmatrix}
x_0 & y_0 & 1 & 0 & 0 & 0 & -x_0 x'_0 & -y_0 x'_0 \\
0 & 0 & 0 & x_0 & y_0 & 1 & -x_0 y'_0 & -y_0 y'_0 \\
x_1 & y_1 & 1 & 0 & 0 & 0 & -x_1 x'_1 & -y_1 x'_1 \\
0 & 0 & 0 & x_1 & y_1 & 1 & -x_1 y'_1 & -y_1 y'_1 \\
x_2 & y_2 & 1 & 0 & 0 & 0 & -x_2 x'_2 & -y_2 x'_2 \\
0 & 0 & 0 & x_2 & y_2 & 1 & -x_2 y'_2 & -y_2 y'_2 \\
x_3 & y_3 & 1 & 0 & 0 & 0 & -x_3 x'_3 & -y_3 x'_3 \\
0 & 0 & 0 & x_3 & y_3 & 1 & -x_3 y'_3 & -y_3 y'_3 \\
x_4 & y_4 & 1 & 0 & 0 & 0 & -x_4 x'_4 & -y_4 x'_4 \\
0 & 0 & 0 & x_4 & y_4 & 1 & -x_4 y'_4 & -y_4 y'_4 \\
& & & & \vdots & & &
\end{bmatrix}
\begin{bmatrix} h_{00} \\ h_{01} \\ h_{02} \\ h_{10} \\ h_{11} \\ h_{12} \\ h_{20} \\ h_{21} \end{bmatrix}
\quad \cdots (\text{Expression } 14)
$$

Expression 15 below is obtained by replacing Expressions 14 with characters for the sake of simplicity.
[Formula 15]

$$ M' = Mh \qquad \cdots (\text{Expression } 15) $$

In Expression 15, the left side of Expression 14 is expressed as M', the two-dimensional matrix on the right side is expressed as M, and the one-dimensional matrix (eight parameters of $h_{00}, h_{01}, h_{02}, h_{10}, h_{11}, h_{12}, h_{20}, h_{21}$ necessary

for the homography transformation) on the right side is expressed as h.

The acquired normalized coordinates generally include measurement errors, and the homography transformation matrix is not uniquely determined. Thus, Expression 15, regardless of the value of h, contains transformation errors expressed by Expression 16 below.

[Formula 16]

$$\| M' - Mh \| \qquad \cdots (\text{Expression 16})$$

Thus, for example, as shown in Expression 17 below, the least squares method may be used to calculate a value h which minimizes the sum of squares of the transformation error, and the calculated value h may be used as calibration data.

[Formula 17]

$$\min \| M' - Mh \|^2 \qquad \cdots (\text{Expression 17})$$

The calibration data obtained in this manner is less affected by the measurement error, and thus the calibration accuracy is improved.

(Other Embodiments)

In the above embodiment (including variations; the same applies hereinafter), the actuator to be controlled is exemplified by the airflow control devices: specifically, the movable nozzle (35) of the vortex ring generation device (20), or the outlet flap (92) of the indoor unit (91) of the air conditioning device (90). However, the actuator to be controlled is not limited to a particular device. For example, other airflow control devices, other environment control devices, or other actuators enabling light, sound, and the like to act on the target may be controlled.

While the embodiments have been described above, it will be understood that various changes in form and details can be made without departing from the spirit and scope of the claims. The embodiments described above may be appropriately combined or modified by replacing the elements thereof, as long as the functions of the subject matters of the present disclosure are not impaired.

INDUSTRIAL APPLICABILITY

As described above, the present disclosure is useful for the control system.

DESCRIPTION OF REFERENCE CHARACTERS

10   Control System
20   Vortex Ring Generation Device
22   Imaging Unit
35   Movable Nozzle (Actuator)
37   Position Specifying Unit
70   Control Unit
72   Setting Unit
73   Adjustment Unit
90   Air Conditioning Device
91   Indoor Unit
92   Outlet Flap (Actuator)
T    Sleeping Person (Target)

**Claims**

1.   A control system comprising:

an imaging unit (22) configured to acquire an image of a plane including a target (T);
an actuator (35, 92) configured to provide physical action to the target (T); and
a control unit (70) configured to control the actuator (35, 92),
the control unit (70) including
a setting unit (72) configured to use a relationship between four or more different position coordinates on the plane and directions of the actuator (35, 92) corresponding to the four or more different position coordinates to set a transformation characteristic of transformation of any position coordinates on the plane into a direction of the actuator (35, 92), and
an adjustment unit (73) configured to use position coordinates of the target (T) on the plane and the transformation characteristic to adjust the direction of the actuator (35, 92) so that the physical action is provided to the target (T).

2.  The control system of claim 1, further comprising:

a position specifying unit (37) configured to point to one point on the plane, wherein
the setting unit (72) specifies a direction of the actuator (35, 92) corresponding to the point pointed to by the position specifying unit (37).

3.  The control system of claim 2, wherein
the position specifying unit (37) and the actuator (35, 92) operate in conjunction with each other.

4.  The control system of any one of claims 1 to 3, wherein
the setting unit (72) specifies the direction of the actuator (35, 92) corresponding to each of the four or more different position coordinates based on a change in the physical action when the actuator (35, 92) is driven.

5.  The control system of any one of claims 1 to 4, wherein
the adjustment unit (73) acquires position coordinates of the target (T) on the plane from an amount of a feature in the image.

6.  The control system of any one of claims 1 to 5, wherein
the setting unit (72) is configured to enable a user to designate an area in the image to be used for setting the transformation characteristic.

7.  The control system of any one of claims 1 to 6, wherein
the setting unit (72) is configured to enable a user to designate a direction of the actuator (35, 92).

8.  The control system of any one of claims 1 to 7, wherein
the actuator (35, 92) is an airflow control device (35, 92).

9.  The control system of claim 8, wherein
the airflow control device (35, 92) is an outlet flap (92) of an indoor unit (91) of an air conditioning device (90).

10. The control system of claim 8, wherein
the airflow control device (35, 92) is a movable nozzle (35) of a vortex ring generation device (20).

FIG.1

# FIG.2

# FIG.3

FIG.4

# FIG.5

[USER]                                                      [CONTROL UNIT (PROGRAM)]

START CALIBRATION

S01 — ACTIVATE CALIBRATION MODE ON SMARTPHONE APPLICATION

S02 — START LOOP (CALIBRATION FOR FOUR OR MORE LOCATIONS)

S04 — MOVE TO CALIBRATION AREA WHILE LOOKING AT THERMO IMAGE

S03 — DISPLAY n-TH CALIBRATION AREA IN THERMO IMAGE

S05 — PROCEED TO NEXT CALIBRATION PROCESSING

S06 — START CONTINUOUS DISCHARGE OF AIR CANNON

S07 — DISPLAY TARGET POSITION IN THERMO IMAGE

S09 — ADJUST CONTROLLER SO THAT AIR CANNON HITS FACE OF USER

S08 — DOES AIR CANNON HIT FACE OF USER?

NO

YES

S10 — CONFIRM THAT TARGET POSITION IS FACE OF USER (PLACE THAT AIR CANNON VORTEX HITS)

S11 — CONFIRM AND DETERMINE THAT TARGET POSITION MATCHES AIR CANNON DIRECTION

S12 — END CONTINUOUS DISCHARGE OF AIR CANNON

S13 — STORE NORMALIZED COORDINATES AS A SET OF THERMO IMAGE POSITION AND AIR CANNON DIRECTION

S14 — HAS CALIBRATION PROCESSING BEEN PERFORMED FOR FOUR OR MORE AREAS?

NO

YES

(A)

**FIG.6**

[USER]　　　　　　　　　　　　　　　　　　　[CONTROL UNIT (PROGRAM)]

Ⓐ

S15 — IS ADDITIONAL CALIBRATION NOT NECESSARY? — NO

YES

CALCULATE CALIBRATION DATA (TRANSFORMATION CHARACTERISTIC) FROM n SETS OF COORDINATES — S16

TEMPORARY OPERATION WITH CALIBRATION DATA — S17

S18 — CONFIRM AUTOMATIC TRACKING

S19 — HAS CALIBRATION BEEN PERFORMED CORRECTLY? — NO

YES

S21 — WHICH ONE OF RECALIBRATION OR ADDITIONAL CALIBRATION IS TO BE PERFORMED? — ADDITIONAL CALIBRATION

RECALIBRATION

SWITCH TO ADDITIONAL CALIBRATION MODE — S24

CHANGE NUMBER OF LOOPS AND RETURN TO STEP S03 — S25

SWITCH TO RECALIBRATION MODE — S22

RESET CALIBRATION DATA AND RETURN TO STEP S02 — S23

STORE CALIBRATION RESULT AND DISPLAY COMPLETION OF CALIBRATION — S20

CALIBRATION COMPLETED

# FIG.7

PLEASE MOVE TO AREA B AND
ADJUST DIRECTION OF OUTLET

TARGET

A  B

C  D

APPLICATION SCREEN

REAL IMAGE

EP 4 403 842 A1

# FIG.8

SPECIFY PREFERRED POSITION

LEFT/RIGHT
SWITCHING BUTTON

# FIG.9

YZ PLANE

CAMERA  LASER

ANGLE OF VIEW
OF CAMERA

LASER
DIRECTION

LASER RANGE

LASER
DIRECTION

1m

1m

Y

Z

TARGET PLANE

LIGHT
SPOT

WORLD ORIGIN

1m

XZ PLANE

Z

X

1m

ANGLE OF
VIEW OF
CAMERA

LASER
RANGE

CAMERA  LASER

LIGHT
SPOT

EP 4 403 842 A1

FIG.10A

CAMERA COORDINATE ORIGIN

1m

1m

CAMERA

x

y

FIG.10B

LASER COORDINATE ORIGIN

1m

1m

LASER

x'

y'

# FIG.11A

# FIG.11B

# FIG.12

CAMERA COORDINATE ORIGIN

LASER COORDINATE ORIGIN

y

x

1m

1m

COORDINATE NUMBER 0

COORDINATE NUMBER 3

CAMERA

LASER

COORDINATE NUMBER 1

COORDINATE NUMBER 2

# FIG.13A

# FIG.13B

# FIG.13C

## INTERNATIONAL SEARCH REPORT

| International application No. |
|---|
| **PCT/JP2022/035168** |

**A. CLASSIFICATION OF SUBJECT MATTER**

*F24F 11/79*(2018.01)i; *G01B 11/00*(2006.01)i; *G05D 3/00*(2006.01)i; *H04N 23/60*(2023.01)i; *F24F 120/12*(2018.01)n
FI: F24F11/79; H04N5/232; G01B11/00 H; G05D3/00 Z; F24F120:12

According to International Patent Classification (IPC) or to both national classification and IPC

**B. FIELDS SEARCHED**

Minimum documentation searched (classification system followed by classification symbols)

F24F11/79; G01B11/00; G05D3/00; H04N5/232; F24F120/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6768985 B1 (NIPPON STEEL ENGINEERING CO., LTD.) 14 October 2020 (2020-10-14) paragraphs [0022]-[0054], fig. 1-8 | 1-7 |
| Y | | 8-10 |
| Y | WO 2017/212528 A1 (MITSUBISHI ELECTRIC CORP.) 14 December 2017 (2017-12-14) paragraphs [0010]-[0065], fig. 1-9 | 8-9 |
| Y | JP 2020-79694 A (DAIKIN INDUSTRIES, LTD.) 28 May 2020 (2020-05-28) paragraphs [0104]-[0106], fig.6 | 8, 10 |
| A | WO 2020/121405 A1 (MITSUBISHI ELECTRIC CORP.) 18 June 2020 (2020-06-18) entire text, all drawings | 1-10 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 November 2022** | **13 December 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/035168**

| Patent document cited in search report | | | Publication date (day/month/year) | Patent family member(s) | | | Publication date (day/month/year) |
|---|---|---|---|---|---|---|---|
| JP | 6768985 | B1 | 14 October 2020 | JP 2022-18144 A paragraphs [0022]-[0054], fig. 1-8 | | | |
| WO | 2017/212528 | A1 | 14 December 2017 | CN 207335076 U paragraphs [0026]-[008200], fig. 1-9 | | | |
| JP | 2020-79694 | A | 28 May 2020 | US | 2021/0228835 | A1 | |
| | | | | paragraphs [0076]-[0078], fig. 6 | | | |
| | | | | WO | 2020/075854 | A1 | |
| | | | | EP | 3845261 | A1 | |
| | | | | CN | 112823034 | A | |
| WO | 2020/121405 | A1 | 18 June 2020 | EP | 3875866 | A1 | |
| | | | | entire text, all drawings | | | |
| | | | | CN | 113195980 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019144464 A